# FASCICULE DE BREVET EUROPEEN

(11) **EP 2 656 630 B1**
(45) Date de publication et mention de la délivrance du brevet: **21.10.2015**
(21) Numéro de dépôt: 11817395.4
(22) Date de dépôt: 19.12.2011
(51) Int. Cl.: H04Q 3/00, H04L 29/12, H04L 29/06, H04M 7/00

(54) **PROCÉDÉ DE RÉSOLUTION D'UN NUMÉRO DE TÉLÉPHONE**
METHODE ZUR RAUFLÖSUNG VON RUFNUMMERN
METHOD OF RESOLUTION OF A TELEPHONE NUMBER

(30) Priorité: 21.12.2010 FR 1060941
(43) Date de publication de la demande: 30.10.2013
(73) Titulaire: Orange, 75015 Paris (FR)
(72) Inventeur: CUBAUD, Sébastien, F-35000 Rennes (FR); BATTISTELLO, Patrick, F-22700 Perros Guirec (FR)
(86) Numéro de dépôt international: PCT/FR2011/053057
(87) Numéro de publication internationale: WO 2012/085430

(56) Documents cités:
- WO-A1-2007/087898
- WO-A2-2009/118606
- US-A1- 2010 150 132

## Description

La présente invention concerne les réseaux de télécommunications de type IP (« *Internet Protocol* »). Plus particulièrement, la présente invention concerne l'identification du domaine IP auquel appartient une certaine ressource, sur la base du numéro de téléphone public ou privé de cette ressource.

Un exemple se trouve dans US 2010/150132.

On dira qu'une ressource joignable via un réseau IP « appartient » à un certain domaine du réseau d'un opérateur donné lorsque le propriétaire de cette ressource possède un compte auprès de cet opérateur, et ce, quel que soit le réseau d'accès utilisé par le propriétaire pour se connecter au réseau de l'opérateur. Dans le cadre du présent document, toute ressource de ce type sera, par souci de brièveté, désignée sous le nom de « dispositif-client » (*« User Equipment* » en anglais). Ces dispositifs-clients peuvent par exemple être un terminal fixe ou mobile, ou une passerelle domestique (« *Residential Gateway »* en anglais) ou située dans une entreprise, ou encore une passerelle d'opérateur réseau (« *Voice Gateway* » en anglais) telle qu'un DSLAM (DSLAM sont les initiales des mots anglais « *Digital Subscriber Line Access Multiplexer* » signifiant « Multiplexeur d'Accès de Lignes d'Abonnés Numériques » ; il s'agit d'un dispositif collectant le trafic de données DSL qui transite sur un certain nombre de lignes téléphoniques).

On rappelle que le Réseau Téléphonique Commuté (RTC) (« *Switched Telephone Network* », ou STN, en anglais), et en particulier le réseau téléphonique commuté public (PSTN en anglais), est un réseau de téléphonie fixe dans lequel un terminal analogique ou une installation numérique sont raccordés à un central téléphonique par une ou plusieurs paires torsadées de fils de cuivre alimentés par le réseau, l'ensemble constituant ce qu'on appelle la « boucle locale ». Les terminaux téléphoniques analogiques ou numériques peuvent être de diverses sortes, par exemple un téléphone individuel (poste d'abonné), un publiphone, ou un PABX (initiales des mots anglais « *Private Automatic Branch eXchange* » signifiant « autocommutateur téléphonique privé ») qui sert principalement à relier les postes téléphoniques d'un établissement (lignes « internes ») avec le réseau téléphonique public (lignes « externes »).

Le format des numéros de téléphone publics à l'échelle internationale est défini par la recommandation E.164 de l'ITU-T (l'ITU-T est la partie de l'ITU (International Telecommunication Union) chargée de la mise au point de normes internationales).

On rappelle également que le Réseau Terrestre Mobile Public (« *Public Land Mobile Network »,* ou PLMN en anglais), couramment appelé simplement « réseau mobile », désigne un réseau de télécommunications qui permet aux utilisateurs autorisés d'accéder à différents services (tels que téléphonie, messagerie, transmissions de données, et diffusions de contenus audiovisuels) en situation de mobilité à partir de terminaux portatifs. Selon le pays et l'opérateur, un réseau PLMN peut reposer sur différentes architectures normalisées, comme le GSM, le CDMA, ou l'UMTS notamment. Dans la plupart des pays, il existe aujourd'hui en fait plusieurs réseaux PLMN, qui sont exploités par des opérateurs différents ; ces réseaux sont généralement interconnectés entre eux, ce qui permet d'établir des communications entre terminaux enregistrés sur des réseaux mobiles différents. Ils sont également interconnectés avec le RTC, ce qui permet d'établir des communications entre terminaux mobiles et terminaux fixes.

Dans le cadre de la présente invention, on désignera par « réseau circuit » tout type de réseau commuté, fixe (RTC) ou mobile (PLMN), utilisant un adressage public au format E.164 ou un adressage privé.

On rappelle également que les réseaux IP permettent la diffusion de données conversationnelles, tels que « Voix sur IP » (VoIP), « Partage de Contenu », ou « Messagerie Instantanée ». De nos jours, les réseaux IP sont généralement aptes à mettre en oeuvre des protocoles de contrôle de session évolués, tels que H. 323 ou SIP.

Le protocole H.323 a été mis au point par l'UIT-T. Il spécifie des procédures concernant la signalisation, la négociation de codeur-décodeur, et le transport de l'information. Il est largement utilisé par les fabricants d'équipements vocaux et de conférences vidéo, ainsi que dans plusieurs applications Internet en temps-réel telles que « NetMeeting ».

Le protocole SIP (initiales des mots anglais *« Session Initiation Protocol »* signifiant « Protocole d'Initiation de Session ») a été défini par l'IETF dans le document RFC 3261. Ce protocole permet l'établissement, la modification et la terminaison de sessions multimédia dans un réseau utilisant le protocole IP.

Le protocole SIP est utilisé en particulier dans les infrastructures de type IMS (initiales des mots anglais « *IP Multimedia Subsystem »* signifiant « Sous-système Multimédia sur IP »). L'IMS a été défini par les organismes de normalisation 3GPP (« *3rd Generation Partnership Project »*) et TISPAN (« *Telecommunications and Internet Converged Services and Protocols for Advanced Networking »*). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Les services de communication sur réseau IP peuvent identifier des ressources physiques ou virtuelles au moyen de chaînes de caractères, par exemple des alias H.323 ou des « URI » (initiales des mots anglais *« Uniform Resource Identifier* » signifiant « Identifiant Uniforme de Ressource »). La syntaxe des URI est définie dans le document RFC 3986 de l'IETF (Internet Engineering Task Force) ; la connaissance de l'URI d'une ressource permet (par exemple, au moyen d'une requête DNS) d'obtenir l'adresse IP d'un équipement du réseau de l'opérateur gérant cette ressource.

En particulier, dans les réseaux mettant en oeuvre le protocole SIP, on distingue deux types d'identifiants de ressource : ceux de la forme « SIP-URI » telle que définie dans la RFC 3261, ou ceux de la forme « tel-URI » telle que définie dans la RFC 3966. Une SIP-URI est de la forme « user@host » (par exemple, alice@domaine1), où la partie « host » identifie le domaine de l'opérateur responsable de l'identité représentée par la partie « user ». Une tel-URI est de la forme « tel:numéro_de_téléphone » (par exemple, tel:+33123456789) en référence aux numéros de téléphone publics internationaux, ou de la forme « tel:numéro_de_téléphone;phone-context=... » (par exemple, tel:0623456789;phone-context=+33) en référence aux numéros de téléphone attribués par un opérateur pour son réseau privé.

Par souci de brièveté, dans le reste de la présente description, nous appellerons « URI » tout type d'identifiant de ressource applicative physique ou virtuelle joignable via un réseau IP.

Pour pouvoir établir une communication via un (ou plusieurs) réseau(x) IP, le domaine IP auquel appartient l'appelant (appelé « domaine origine » ci-après) doit connaître un identifiant du domaine destinataire (par souci de brièveté, on confond dans le présent document tout abonné à un réseau IP avec le dispositif-client de cet abonné ; en outre, on désigne par « domaine destinataire » le domaine IP auquel appartient l'appelé). Or l'appelant ne connaît bien souvent que le numéro de téléphone de l'appelé, ledit numéro de téléphone étant au format public selon la recommandation E.164 ou à un format privé (par souci de brièveté, on désignera ci-après ce numéro de téléphone par « identifiant E.164 » quel que soit son format, public ou privé). Malheureusement, ce numéro de téléphone ne permet pas de déterminer facilement l'identité du domaine destinataire. Autrement dit, il n'existe pas d'association automatique entre l'identifiant E.164 et l'URI (ou les URI) d'entrée du domaine destinataire.

Pour résoudre ce problème, selon une première technique connue, le domaine origine route les appels sur la base de tranches de numéros de téléphone, de manière analogue au routage effectué dans les réseaux RTC ou dans les réseaux mobiles. Mais un tel routage est coûteux en gestion opérationnelle (configuration initiale, plus modifications éventuelles), et ne permet pas d'établir une relation directe entre le domaine origine et le domaine destinataire.

Selon une deuxième technique connue, le domaine origine interroge une base de données ENUM, telle que définie dans la RFC 3761. Une base de données ENUM fournit une correspondance entre un identifiant E. 164 et une information de type URI. Dans le cas particulier où le domaine origine est un réseau utilisant le protocole SIP, l'interrogation de cette base de données peut être réalisée par le coeur de réseau, et encore plus particulièrement par la fonction S-CSCF dans le cas d'un réseau IMS. Mais cette technique ENUM nécessite que la correspondance E.164/URI du domaine destinataire soit connue du domaine origine ; ce partage présuppose une relation de confiance entre les entités fournissant cette association. Cette technique nécessite également un effort de publication et de maintien des informations de la base de données. Si la base est accessible publiquement, elle présuppose une gouvernance commune des bases utilisées. De plus, son utilisation serait risquée, car tout utilisateur VoIP deviendrait joignable depuis n'importe quelle entité connectée à l'Internet, et serait donc exposé à des appels indésirables (« *SPam over Ip Telephony »,* ou SPIT en anglais). C'est pourquoi, même si la technique ENUM est déployée à ce jour par un certain nombre d'opérateurs, elle ne l'est que dans un cadre privé - restreint à son domaine propre ou à un nombre limité de domaines de confiance ; le déploiement d'ENUM à une échelle nationale, ou, a fortiori, mondiale, paraît aujourd'hui encore utopique.

Une troisième technique connue, enfin, est la technique VIPR (*« Verification Involving PSTN Reachability »*) proposée par la société Cisco (cf. draft-Internet http://tools.ietf.org/html/draft-rosenberg-dispatch-vipr-overview-02, 7 mars 2010), laquelle est destinée à être mise en oeuvre au sein d'un réseau de pairs (*« Peer-To-Peer* » ou P2P en anglais). Lorsque l'URI du domaine destinataire n'est pas connue, cette technique VIPR comprend les phases suivantes :
1) on effectue un premier appel téléphonique via le RTC et, s'il aboutit, l'appelant et l'appelé gardent la trace d'informations relatives à cet appel (« *Call Detail Record* » ou CDR en anglais), telles que le numéro de téléphone de l'appelant, le numéro de téléphone appelé, l'heure de début de l'appel, et l'heure de fin de l'appel ;
2) l'appelant recherche le numéro de téléphone appelé, au format E.164, dans une base de données publiée par le réseau de pairs, ladite base de données associant à chaque numéro de téléphone (au format E.164) qu'elle contient un identifiant, dans le réseau de pairs, d'une ressource censée être responsable de ce numéro ;
3) si le numéro de téléphone appelé figure dans cette base de données, l'appelant et l'appelé s'authentifient mutuellement sur la base de la connaissance partagée de ce CDR enregistré lors de la première étape ci-dessus ; et
4) si le CDR est valide, ledit noeud fournit à l'appelant l'URI d'entrée du domaine destinataire pour le numéro de téléphone appelé concerné ; cet URI, ainsi que le nom du domaine de l'appelant et d'autres informations de validité, sont encapsulés dans un « ticket » associé au numéro appelé et contenant, pour garantir l'intégrité des données, un code MAC (« *Message Authentication Code* ») de ces données obtenu au moyen d'une clé secrète du domaine destinataire.

La technique VIPR a pour inconvénient d'être relativement complexe, notamment en ce qui concerne la gestion de la publication des numéros de téléphone dans le réseau P2P, et la validation de l'association numéro de téléphone/adresse IP de la ressource responsable (au cas, notamment, où plusieurs domaines déclarent héberger le même numéro). De plus, elle pose des problèmes de passage à l'échelle (dans le cas d'un grand nombre de réseaux ou d'utilisateurs), et impose des contraintes de sécurité très fortes portant sur les clés secrètes servant à authentifier les tickets, et ce, d'autant plus que ces tickets ont une durée de validité longue (en théorie). A l'inverse, réduire la durée de validité des tickets conduit à les renouveler plus souvent et engendre donc des contraintes opérationnelles.

La présente invention concerne donc un procédé de résolution par un domaine IP, dit domaine origine, du numéro de téléphone public ou privé d'un dispositif-client, dit appelé, appartenant à un domaine IP, dit domaine destinataire. Ledit procédé est remarquable en ce qu'il comprend les étapes suivantes :
a) un quelconque dispositif-client, dit appelant, appartenant audit domaine origine place un appel téléphonique vers ledit numéro de téléphone,
b) ledit appel téléphonique est transmis audit domaine destinataire via un réseau téléphonique commuté sur la base dudit numéro de téléphone, et
c) sauf avis contraire du domaine destinataire et/ou de l'appelé, le domaine destinataire envoie audit domaine origine un flux dudit réseau téléphonique commuté contenant au moins un identifiant permettant de joindre le domaine destinataire via un réseau IP.

On obtient ainsi l'association recherchée entre un numéro de téléphone et l'URI d'entrée du domaine destinataire de l'appel (ou les URIs de ce domaine destinataire, qui sont éventuellement fonction de l'identité du domaine de l'appelant ; par souci de brièveté, nous désignons par « l'URI du domaine destinataire » le, ou les URI(s) d'entrée de ce domaine).

Grâce à ces dispositions, on se dispense de toute publication de numéros de téléphone, ou de couples numéro de téléphone/adresse IP associés à des ressources. En outre, l'invention permet aisément d'atteindre une couverture mondiale, car elle ne nécessite pas la mise en place d'une nouvelle infrastructure, et le passage à l'échelle est facile à gérer. Enfin, on peut, si on le souhaite, renforcer par divers moyens le procédé selon l'invention sur le plan de la sécurité au moyen de protocoles cryptographiques classiques, de manière à ce que l'URI de l'appelé soit reçu, par exemple, sans altération et uniquement après authentification de l'appelant. On notera à cet égard que les réseaux circuit offrent de nos jours une sécurité relativement grande.

Selon des caractéristiques particulières, ledit flux est un signal de réponse d'appel, et ledit identifiant est inséré dans un UUI (User to User Information) et/ou dans l'enveloppe d'informations d'accès dudit signal de réponse d'appel.

Ce mode de réalisation est avantageusement simple à mettre en oeuvre dans la mesure où les seuls éléments du système nécessitant une configuration non-classique sont le dispositif d'interconnexion entre le domaine origine et le RTC/PLMN, et le dispositif d'interconnexion entre le RTC/PLMN et le domaine destinataire.

Selon d'autres caractéristiques particulières, ledit identifiant est inséré dans un flux modulé par PCM (Pulse Code Modulation).

Ce deuxième mode de réalisation est lui aussi avantageusement simple à mettre en oeuvre, pour les mêmes raisons que le premier mode.

Corrélativement, l'invention concerne divers dispositifs.

Elle concerne ainsi, premièrement, un dispositif d'interconnexion entre un domaine IP, dit domaine origine, et un réseau téléphonique commuté fixe ou mobile, comprenant des moyens pour recevoir un appel téléphonique placé par un premier dispositif-client appartenant audit domaine origine vers le numéro de téléphone public ou privé d'un deuxième dispositif-client appartenant à un domaine IP, dit domaine destinataire, et des moyens pour transmettre ledit appel téléphonique audit domaine destinataire via ledit réseau téléphonique commuté sur la base dudit numéro de téléphone. Ledit dispositif est remarquable en ce qu'il comprend en outre des moyens pour recevoir de la part du domaine destinataire un flux du réseau téléphonique commuté contenant au moins un identifiant permettant de joindre le domaine destinataire via ledit réseau IP.

L'invention concerne aussi, deuxièmement, un dispositif d'interconnexion entre un réseau téléphonique commuté fixe ou mobile et un domaine IP, dit domaine destinataire, comprenant des moyens pour recevoir, via ledit réseau téléphonique commuté, un appel téléphonique placé par un premier dispositif-client appartenant à un domaine IP, dit domaine origine, vers le numéro de téléphone public ou privé d'un deuxième dispositif-client appartenant audit domaine destinataire. Ledit dispositif est remarquable en ce qu'il comprend en outre des moyens pour envoyer audit domaine origine un flux du réseau téléphonique commuté contenant au moins un identifiant permettant de joindre le domaine destinataire via ledit réseau IP.

Selon des caractéristiques particulières, ledit flux est un signal de réponse d'appel, et ledit identifiant est inséré dans un UUI (User to User Information) et/ou dans l'enveloppe d'informations d'accès dudit signal de réponse d'appel.

Selon d'autres caractéristiques particulières, ledit identifiant est inséré dans un flux modulé par PCM (Pulse Code Modulation).

Les avantages offerts par ces dispositifs d'interconnexion sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de résolution d'un numéro de téléphone succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère à la figure unique qui l'accompagne et qui représente, à titre d'exemple, une architecture réseau adaptée à la mise en oeuvre de l'invention.

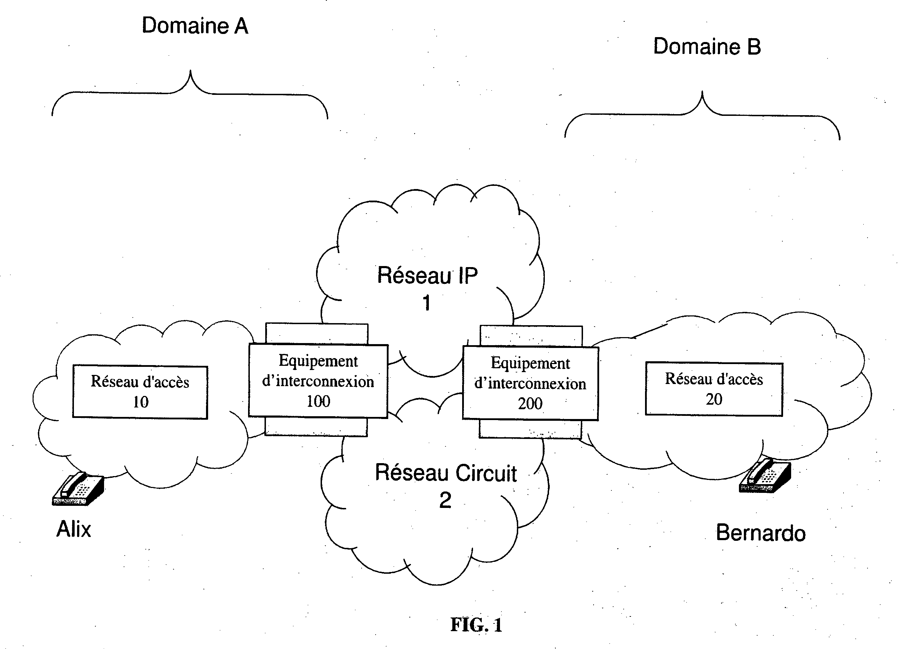

La figure 1 montre un domaine IP, dit « domaine origine » A, pour les besoins duquel on souhaite trouver un URI d'entrée du domaine IP, dit « domaine destinataire » B, d'un abonné -- appelons-le « Bernardo », appartenant à ce domaine destinataire B et identifié par un numéro E.164 (ou, plus généralement, par un identifiant routable par un réseau circuit).

Pour ce faire, on fait placer par un abonné quelconque -- appelons-le « Alix », appartenant au domaine origine A, un appel téléphonique vers Bernardo, via un réseau d'accès 10 quelconque.

Cet appel est reçu par un équipement de routage du domaine A (par exemple, mettant en oeuvre la fonction BGCF dans le cas d'un réseau IMS). L'équipement de routage transmet l'appel à un dispositif d'interconnexion 100 (qui sera appelé « premier dispositif d'interconnexion ») du domaine A avec un réseau circuit 2. Par exemple, dans le cas où ce réseau circuit 2 est un réseau PLMN, le dispositif d'interconnexion est désigné par GMSC. Par exemple aussi, lorsque le domaine A est un réseau IMS, la fonction d'interconnexion assurée par le dispositif d'interconnexion est désignée par MGCF.

Le dispositif d'interconnexion 100 transmet ensuite l'appel via ledit réseau circuit 2 sur la base du numéro de téléphone demandé.

Cet appel est reçu par un dispositif d'interconnexion 200 (qui sera appelé « second dispositif d'interconnexion ») entre ledit réseau circuit 2 et le domaine B, et transmis à l'abonné Bernardo, via un réseau d'accès 20 quelconque.

Sauf avis contraire du domaine B et/ou de Bernardo, un dispositif du domaine B (de préférence, ledit second dispositif d'interconnexion 200 lui-même), insère au moins un URI du domaine B dans un flux du réseau circuit 2 en réponse à l'appel reçu.

Le domaine A, après réception de cet URI du domaine B, stocke l'association numéro appelé/URI (dans une base privée de type ENUM par exemple) aux fins d'utilisation pour d'éventuels futurs signaux, ou appels téléphoniques ou messages adressés à Bernardo, qui pourront donc être entièrement routés sur un (ou plusieurs) réseau(x) IP 1 de manière classique (le cas échéant en résolvant l'URI -- ou les URIs par ordre de préférence -- via les mécanismes prévus par les protocoles classiques tels que DNS ou DNSSEC).

On va décrire à présent divers modes de réalisation.

Selon un premier mode de réalisation, on utilise l'élément d'information UUI de messages de signalisation utilisant le protocole ISUP ou le protocole BICC.

Le protocole ISUP (initiales des mots anglais « ISDN User Part » signifiant « Partie d'Utilisateur de l'ISDN »), défini dans les recommandations Q.761-4 de l'ITU-T, est un format de message faisant partie du Système de Signalisation #7 (noté SS7), qui est utilisé pour établir des appels téléphoniques dans le RTC. Quand un appel téléphonique est établi entre deux abonnés, beaucoup de centraux téléphoniques seront impliqués, éventuellement à travers des frontières internationales. Pour permettre, dans les réseaux RTC utilisant les messages ISUP, à un appel d'être établi correctement, un commutateur fournit au moyen de ces messages des informations concernant l'appel, comme le numéro de l'appelé ou de l'appelant, au commutateur suivant dans le réseau. Les centraux téléphoniques sont reliés entre eux par des liens à haut débit qui véhiculent les données de signalisation ISUP à un taux de 64 kbit/s. Chaque message ISUP comprend un Code d'Identification de Circuit (CIC) qui identifie ce message. Le central téléphonique utilise les informations de signalisation reçues (en particulier le numéro appelé) pour déterminer quels CIC entrants et quels CIC sortants doivent être connectés pour router de bout en bout les données vocales. Au cas où aucun CIC sortant n'est disponible sur un central particulier, un message de libération est renvoyé aux commutateurs précédents dans la chaîne, de manière à ce que l'on puisse essayer une nouvelle route:

Le protocole BICC (initiales des mots anglais « *Bearer Independent Call Control* » signifiant « Contrôle d'Appel Indépendant du Support ») est un protocole de signalisation reposant sur l'ISUP, et qui est conçu pour inter-fonctionner avec les technologies de transport existantes. BICC est spécifié dans les recommandations Q.1901 de l'ITU-T. Les messages de signalisation BICC sont quasiment identiques à ceux de l'ISUP ; ils diffèrent néanmoins en ce que les en-têtes de messages BICC ne comportent pas de Code d'Identification de Circuit. L'architecture BICC est constituée de noeuds de service interconnectés, qui fournissent la fonction de Service d'Appel et la fonction de Contrôle de Support ; la fonction de Service d'Appel utilise la signalisation BICC pour l'établissement d'appel, et peut inter-fonctionner avec ISUP ; la fonction de Contrôle de Support reçoit des directives de la part de la fonction de Service d'Appel au moyen du protocole de Contrôle de Support BICC (recommandation Q.1950 de l'ITU-T), et est responsable de l'établissement et de la suppression des routes de support sur un ensemble de liaisons de transport physiques comme l'Internet. Les protocoles BICC sont adaptés aux communications multimédia commutées à haut débit et à large bande. Ils sont aussi utilisés pour les communications mobiles ; par exemple, le 3GPP a inclus BICC dans la norme UMTS (initiales des mots anglais « *Universal Mobile Telecommunications Service* » signifiant « Service de Télécommunications Mobile Universel ») à partir de la version 4 de cette norme.

Les messages ISUP et les messages BICC peuvent comporter un élément d'information noté UUI (initiales des mots anglais *« User to User Information »* signifiant « Informations d'Usager à usager »). Cet élément d'information permet d'insérer dans la signalisation d'appel des informations annexes à l'appel. Ces informations ne sont interprétées sémantiquement que par les éléments d'extrémité du réseau et sont véhiculées de manière transparente dans le coeur de réseau. Elles n'affectent pas directement le traitement de l'appel, par exemple son routage. On utilise par exemple des UUI dans les PABX pour échanger des informations propriétaires.

Ce premier mode de réalisation fonctionne comme suit.

Le premier dispositif d'interconnexion 100 envoie un message d'établissement d'appel, à savoir un IAM (initiales des mots anglais *« Initial Address Message »* signifiant « Message d'Adressage Initial »), auquel il ajoute, de préférence, un UUI (si absent) contenant une information, permettant au second dispositif d'interconnexion 200 de récupérer une clé publique ou un certificat cryptographique ou un identifiant du domaine origine A, ou bien un identifiant de l'appelant Alix, ou encore un pointeur sécurisé vers un gestionnaire de certificats du domaine origine A. Si l'UUI est déjà renseigné, le premier dispositif d'interconnexion 100 fournit de préférence cette information, par exemple en la concaténant avec les informations d'usager à usager préexistantes.

Si l'origine de l'appel a ainsi fourni une information permettant au domaine destinataire de l'identifier, le second dispositif d'interconnexion 200 peut alors déterminer (en fonction de la politique de l'opérateur du réseau appelé) si cette origine est autorisée à recevoir l'URI du domaine destinataire. Si l'origine de l'appel n'a pas fourni d'information permettant au domaine destinataire de l'identifier, le domaine destinataire peut néanmoins (en fonction de la politique de l'opérateur du réseau appelé) autoriser cette origine à recevoir son URI. Dans les deux cas précédents, sauf avis contraire du domaine destinataire B et/ou du deuxième dispositif-client, le second dispositif d'interconnexion 200 insère (si absent) ou concatène (si déjà présent), dans un flux en réponse, un UUI contenant l'URI d'entrée du domaine destinataire B, de préférence chiffré au moyen d'une clé publique du domaine origine A ; si la taille de cette information est supérieure à la taille maximale de l'UUI (habituellement limitée à 128 octets), il est possible d'inclure un pointeur sécurisé (par exemple, une URL https:) pour permettre la récupération de cette information.

On notera que ledit flux en réponse peut être :
- un signal de type ISUP ACM (initiales des mots anglais « *Address Complete Message* » signifiant « Message d'Adressage Achevé »), ou de type ISUP CPG (initiales des mots anglais *« Call ProGress* » signifiant « Progression d'Appel ») émis avant que l'appelé ne décroche, ou
- un signal de type ISUP ANM (initiales des mots anglais « *ANswer Message* » signifiant « Message en Réponse ») émis après que l'appelé décroche, ou encore
- un signal de type REL (initiales du mot anglais « *Release »* signifiant « Libération ») ou RLC (initiales des mots anglais *« ReLease Complete* » signifiant « Libération Achevée ») émis lorsque l'appel est libéré.

En variante, les domaines A et B peuvent échanger les informations mentionnées ci-dessus via d'autres éléments d'information ISUP/BICC ; on pourra par exemple utiliser à cet effet l'enveloppe d'informations d'accès (« Access Transport » en anglais), qui fournit une information engendrée au niveau de l'accès au réseau circuit 2 et transportée de façon transparente par le réseau circuit 2 entre le commutateur de départ et le commutateur d'arrivée dans les deux sens. Il est possible également d'utiliser simultanément tous ces éléments d'information (au détriment éventuellement d'une fragmentation du message ISUP/BICC).

Selon un deuxième mode de réalisation, on utilise des flux PCM établis entre les domaines A et B. On rappelle à cet égard que le sigle PCM (initiales des mots anglais « *Pulse Code Modulation »* signifiant « Modulation par Code d'Impulsions ») désigne la technique d'échantillonnage numérique d'un signal analogique dans laquelle l'amplitude du signal est échantillonnée périodiquement. La modulation PCM est notamment utilisée pour coder la voix sur les réseaux RTC et VoIP (parmi d'autres modulations possibles) ainsi que dans le coeur de certains réseaux PLMN, et pour coder le son dans les disques compacts audio (CD), les bandes DAT et les Minidisc, les disques optiques à haute capacité (Blu-ray et HD-DVD) ainsi que dans les fichiers WAV.

On notera qu'il est possible d'insérer une information non-multimédia dans un flux PCM, comme cela a été démontré (dans un contexte technique différent) par la procédure TFO (Tandem-Free Operation) décrite dans la recommandation TS 28.062 du 3GPP. Pour ce faire, on peut par exemple utiliser le bit le moins fort d'un échantillon PCM tous les 16 échantillons (i.e. un bit tous les 16x8 bits, de sorte que 100 octets sont échangés en 1,6 secondes).

Ce deuxième mode de réalisation fonctionne comme suit.

De préférence, ce mode de réalisation comprend une phase d'initialisation au cours de laquelle le premier dispositif d'interconnexion 100 envoie, dans un flux PCM et sous un codage prédéterminé (par exemple, UTF-8), un message protocolaire permettant de convenir avec le deuxième dispositif d'interconnexion 200 des modalités de mise en oeuvre du présent mode de réalisation (par exemple, un message d'initialisation du domaine origine A vers le domaine destinataire B suivi d'un message d'acquittement du domaine B vers le domaine A).

Si l'accord entre les domaines A et B est validé, ou si cette phase d'initialisation n'est pas requise, le premier dispositif d'interconnexion 100 envoie de préférence audit domaine destinataire (B), avec l'appel d'Alix, une clé publique ou un certificat cryptographique ou un identifiant du domaine origine A, ou bien un identifiant de l'appelant Alix, ou encore un pointeur sécurisé vers un gestionnaire de certificats du domaine origine A. On peut en outre ajouter un contrôle de bonne transmission des données au moyen d'un checksum sur les bits transmis.

Si l'origine de l'appel a ainsi fourni une information permettant au domaine destinataire de l'identifier, le second dispositif d'interconnexion 200 peut alors déterminer (en fonction de la politique de l'opérateur du réseau appelé) si cette origine est autorisée à recevoir l'URI du domaine destinataire. Si l'origine de l'appel n'a pas fourni d'information permettant au domaine destinataire de l'identifier, le domaine destinataire peut néanmoins (en fonction de la politique de l'opérateur du réseau appelé) autoriser cette origine à recevoir son URI. Dans les deux cas précédents, sauf avis contraire du domaine destinataire B et/ou du deuxième dispositif-client, le second dispositif d'interconnexion 200 insère, dans un flux PCM en réponse, l'URI d'entrée du domaine destinataire B, de préférence chiffré au moyen d'une clé publique du domaine origine A.

Selon une première variante, ledit flux en réponse peut être un flux média préliminaire émis avant que l'appelé ne décroche. On rappelle à cet égard que les flux média préliminaires (« *early-media »* en anglais) sont des flux multimédia pouvant être échangés entre un terminal appelant et un terminal appelé pendant la phase d'établissement de l'appel, autrement dit avant l'établissement de l'appel ; à titre d'exemple, les flux média préliminaires peuvent être utilisés pour véhiculer un signal de retour d'appel choisi par l'appelé, par exemple de type CRBT (Color Ring Back Tone), ou un message d'annonce à destination de l'appélant. Cette première variante ne rend pas possible l'identification du domaine origine car les flux média ne sont pas encore bidirectionnels à ce stade de l'appel.

Selon une deuxième variante, ledit flux en réponse peut être un flux multimédia ordinaire émis après que l'appelé décroche, auquel cas les flux sont bidirectionnels et l'identification du domaine origine est possible.

La sécurité des modes de réalisation décrits ci-dessus peut être renforcée au moyen des mesures (non mutuellement exclusives) suivantes :
- on peut utiliser une infrastructure à clé publique (PKI) pour garantir l'origine de l'appel et l'intégrité des données envoyées par le domaine A, et/ou pour permettre au domaine B, par exemple en signant son URI d'entrée, de garantir l'origine du flux en réponse et l'intégrité des données qu'il contient ;
- la clé de chiffrement des données fournies par le second dispositif d'interconnexion 200 peut résulter d'un échange de type Diffie-Hellman ayant lieu lors d'une phase d'initialisation entre les deux dispositifs d'interconnexion ; cette clé peut également servir à protéger en intégrité les données du flux en réponse.

De plus, le domaine B peut ajouter aux données transmises au domaine A un ticket dépendant d'un secret connu uniquement du domaine B et contenant des informations permettant au domaine B de valider un éventuel futur signal, ou appel téléphonique ou message envoyé au domaine B par le domaine A via ledit réseau IP 1. On peut sécuriser ou faciliter l'utilisation d'un tel ticket au moyen des variantes suivantes :
- le ticket est unique pour chaque couple domaine A/numéro appelé ;
- le ticket est unique pour un domaine A pour tous les numéros hébergés par le domaine B ; cela évite un stockage trop important de tickets pour le domaine A ;
- le ticket est récupéré de manière sécurisée auprès d'une entité dédiée à la génération de tickets ; cette entité peut être gérée par le domaine B ou par un domaine tiers possédant un secret partagé avec les domaines A et B ; dans cette variante, le second dispositif d'interconnexion 200 fournit également, dans le flux en réponse, le moyen de contacter cette entité ; cette variante présente l'avantage d'éviter l'échange du ticket via le flux en réponse, mais nécessite le mise en place d'une entité dédiée à la génération de tickets.

On notera que l'invention peut être mise en oeuvre au sein d'un noeud d'un domaine IP, notamment au sein d'un équipement d'interconnexion avec un réseau commuté fixe ou mobile, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant dés instructions pour la mise en oeuvre de l'un quelconque des procédés de résolution d'un numéro de téléphone selon l'invention.

En effet, l'invention vise aussi un programme d'ordinateur téléchargeable depuis un réseau de communication comprenant des instructions pour l'exécution des étapes d'un procédé de résolution d'un numéro de téléphone selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de résolution d'un numéro de téléphone selon l'invention.

## Revendications

1. Procédé de résolution par un domaine IP, dit domaine origine (A), du numéro de téléphone public ou privé d'un dispositif-client, dit appelé, appartenant à un domaine IP, dit domaine destinataire (B), **caractérisé en ce qu'**il comprend les étapes suivantes :
a) un quelconque dispositif-client, dit appelant, appartenant audit domaine origine (A) place un appel téléphonique vers ledit numéro de téléphone,
b) ledit appel téléphonique est transmis audit domaine destinataire (B) via un réseau téléphonique commuté (2) sur la base dudit numéro de téléphone, et
c) sauf avis contraire du domaine destinataire et/ou de l'appelé, le domaine destinataire (B) envoie audit domaine origine (A) un flux dudit réseau téléphonique commuté (2) contenant au moins un identifiant permettant de joindre le domaine destinataire via un réseau IP (1).

2. Procédé de résolution d'un numéro de téléphone selon la revendication 1, **caractérisé en ce que** ledit flux est un signal de réponse d'appel, et **en ce que** ledit identifiant est inséré dans un UUI (User to User Information) et/ou dans l'enveloppe d'informations d'accès dudit signal de réponse d'appel.

3. Procédé de résolution d'un numéro de téléphone selon la revendication 1, **caractérisé en ce que** ledit identifiant est inséré dans un flux modulé par PCM (Pulse Code Modulation).

4. Procédé de résolution d'un numéro de téléphone selon l'une quelconque des revendications 1 à 3, **caractérisé en ce que** ledit domaine origine (A) envoie audit domaine destinataire (B), avec ledit appel transmis, une clé publique ou un certificat cryptographique ou un identifiant du domaine origine (A), ou bien un identifiant dudit appelant, ou encore un pointeur sécurisé vers un gestionnaire de certificats du domaine origine (A).

5. Procédé de résolution d'un numéro de téléphone selon l'une quelconque des revendications 1 à 4, **caractérisé en ce que** ledit identifiant du domaine destinataire (B) est chiffré et/ou signé par le domaine destinataire (B).

6. Procédé de résolution d'un numéro de téléphone selon l'une quelconque des revendications 1 à 5, **caractérisé en ce que** le domaine destinataire (B) envoie en outre audit domaine origine (A) un ticket dépendant d'un secret connu uniquement du domaine destinataire (B), ledit ticket contenant des informations permettant au domaine destinataire (B) de valider un éventuel futur signal, ou appel téléphonique ou message envoyé au domaine destinataire (B) par le domaine origine (A) via ledit réseau IP (1).

7. Dispositif d'interconnexion (100) entre un domaine IP, dit domaine origine (A), et un réseau téléphonique commuté (2) fixe ou mobile, comprenant des moyens pour recevoir un appel téléphonique placé par un premier dispositif-client appartenant audit domaine origine (A) vers le numéro de téléphone public ou privé d'un deuxième dispositif-client appartenant à un domaine IP, dit domaine destinataire (B), et des moyens pour transmettre ledit appel téléphonique audit domaine destinataire (B) via ledit réseau téléphonique commuté (2) sur la base dudit numéro de téléphone, **caractérisé en ce qu'**il comprend en outre des moyens pour recevoir de la part du domaine destinataire (B) un flux du réseau téléphonique commuté (2) contenant au moins un identifiant permettant de joindre le domaine destinataire (B) via ledit réseau IP (1).

8. Dispositif d'interconnexion (200) entre un réseau téléphonique commuté (2) fixe ou mobile et un domaine IP, dit domaine destinataire (B), comprenant des moyens pour recevoir, via ledit réseau téléphonique commuté (2), un appel téléphonique placé par un premier dispositif-client appartenant à un domaine IP, dit domaine origine (A) vers le numéro de téléphone public ou privé d'un deuxième dispositif-client appartenant audit domaine destinataire (B), **caractérisé en ce qu'**il comprend en outre des moyens pour envoyer audit domaine origine (A) un flux du réseau téléphonique commuté (2) contenant au moins un identifiant permettant de joindre le domaine destinataire (B) via ledit réseau IP (1).

9. Dispositif d'interconnexion selon la revendication 7 ou la revendication 8, **caractérisé en ce que** ledit flux est un signal de réponse d'appel, et **en ce que** ledit identifiant est inséré dans un UUI (User to User Information) et/ou dans l'enveloppe d'informations d'accès dudit signal de réponse d'appel.

10. Dispositif d'interconnexion selon la revendication 7 ou la revendication 8, **caractérisé en ce que** ledit identifiant est inséré dans un flux modulé par PCM (Pulse Code Modulation).

11. Moyen de stockage de données inamovible, ou partiellement ou totalement amovible, comportant des instructions de code de programme informatique pour l'exécution des étapes d'un procédé de résolution d'un numéro de téléphone selon l'une quelconque des revendications 1 à 6.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de résolution d'un numéro de téléphone selon l'une quelconque des revendications 1 à 6, lorsqu'il est exécuté sur un ordinateur.

## Patentansprüche

1. Verfahren zur Auflösung durch eine IP-Domain, Ursprungsdomain (A) genannt, der öffentlichen oder privaten Telefonnummer einer Kundenvorrichtung, Angerufene genannt, die einer IP-Domain, Bestimmungsdomain (B) genannt, angehört, **dadurch gekennzeichnet, dass** es die folgenden Schritte umfasst:
a) eine beliebige Kundenvorrichtung, Anrufende genannt, die der Ursprungsdomain (A) angehört, platziert einen Telefonanruf zu der Telefonnummer,
b) der Telefonanruf wird zu der Bestimmungsdomain (B) über ein Telefonwählnetz (2) auf Basis der Telefonnummer übertragen, und
c) außer bei einer gegenteiligen Mitteilung durch die Bestimmungsdomain und/oder die Angerufene, sendet die Bestimmungsdomain (B) an die Ursprungsdomain (A) einen Strom des Telefonwählnetzes (2), der mindestens einen Identifikator enthält, der es ermöglicht, sich mit der Bestimmungsdomain über das IP-Netz (1) zu verbinden.

2. Verfahren zur Auflösung einer Telefonnummer nach Anspruch 1, **dadurch gekennzeichnet, dass** der Strom ein Rufantwortsignal ist, und dass der Identifikator in ein UUI (User to User Information) und/oder in die Zugangsinformationshülle des Rufantwortsignals eingesetzt ist.

3. Verfahren zur Auflösung einer Telefonnummer nach Anspruch 1, **dadurch gekennzeichnet, dass** der Identifikator in einen durch PCM (Pulse Code Modulation) modulierten Strom eingesetzt ist.

4. Verfahren zur Auflösung einer Telefonnummer nach einem der Ansprüche 1 bis 3, **dadurch gekennzeichnet, dass** die Ursprungsdomain (A) an die Bestimmungsdomain (B) mit dem übertragenen Anruf einen öffentlichen Schlüssel oder ein kryptografisches Zertifikat oder einen Identifikator der Ursprungsdomain (A) oder auch einen Identifikator des Anrufenden oder auch einen gesicherten Pointer zu einem Zertifikatverwalter der Ursprungsdomain (A) sendet.

5. Verfahren zur Auflösung einer Telefonnummer nach einem der Ansprüche 1 bis 4, **dadurch gekennzeichnet, dass** der Identifikator der Bestimmungsdomain (B) durch die Bestimmungsdomain (B) chiffriert und/oder signiert ist.

6. Verfahren zur Auflösung einer Telefonnummer nach einem der Ansprüche 1 bis 5, **dadurch gekennzeichnet, dass** die Bestimmungsdomain (B) ferner an die Ursprungsdomain (A) ein Ticket sendet, das von einem nur der Bestimmungsdomain (B) bekannten Geheimnis abhängt, wobei das Ticket Informationen enthält, die es der Bestimmungsdomain (B) ermöglichen, ein mögliches zukünftiges Signal oder einen Telefonanruf oder eine Nachricht an die Bestimmungsdomain (B) durch die Ursprungsdomain (A) über das IP-Netz (1) gesandten zu validieren.

7. Anschlussvorrichtung (100) zwischen einer IP-Domain, Ursprungsdomain (A) genannt, und einem Telefonwählnetz (2), das fest oder mobil ist, umfassend Mittel, um einen Telefonanruf, der von einer ersten Kundenvorrichtung, die der Ursprungsdomain (A) angehört, zu der öffentlichen oder privaten Telefonnummer einer zweiten Kundenvorrichtung, die einer IP-Domain, Bestimmungsdomain (B) genannt, angehört, platziert wird, zu empfangen, und Mittel, um den Telefonanruf an die Bestimmungsdomain (B) über das Telefonwählnetz (2) auf Basis der Telefonnummer zu übertragen, **dadurch gekennzeichnet, dass** sie ferner Mittel umfasst, um von der Bestimmungsdomain (B) einen Strom des Telefonwählnetzes (2) zu empfangen, der mindestens einen Identifikator enthält, der es ermöglicht, sich mit der Bestimmungsdomain (B) über das IP-Netz (1) zu verbinden.

8. Anschlussvorrichtung (200) zwischen einem festen oder mobilen Telefonwählnetz (2) und einer IP-Domain, Bestimmungsdomain (B) genannt, umfassend Mittel, um über das Telefonwählnetz (2) einen Telefonanruf, der von einer ersten Kundenvorrichtung, die einer IP-Domain, Ursprungsdomain (A) genannt, angehört, zu der öffentlichen oder privaten Telefonnummer einer zweiten Kundenvorrichtung, die der Bestimmungsdomain (B) angehört, platziert wird, zu empfangen, **dadurch gekennzeichnet, dass** sie ferner Mittel umfasst, um an die Ursprungsdomain (A) einen Strom des Telefonwählnetzes (2) zu senden, der mindestens einen Identifikator enthält, der es ermöglicht, sich mit der Bestimmungsdomain (B) über das IP-Netz (1) zu verbinden.

9. Anschlussvorrichtung nach Anspruch 7 oder Anspruch 8, **dadurch gekennzeichnet, dass** der Strom ein Rufantwortsignal ist, und dass der Identifikator in ein UUI (User to User Information) und/oder in die Zugangsinformationshülle des Rufantwortsignals eingesetzt ist.

10. Anschlussvorrichtung nach Anspruch 7 oder Anspruch 8, **dadurch gekennzeichnet, dass** der Identifikator in einen durch PCM (Pulse Code Modulation) modulierten Strom eingesetzt ist.

11. Nicht entfernbares oder teilweise oder zur Gänze entfernbares Datenspeichermittel, umfassend Informatikprogrammcodebefehle für die Ausführung der Schritte eines Verfahrens zur Auflösung einer Telefonnummer nach einem der Ansprüche 1 bis 6.

12. Von einem Kommunikationsnetz fernladbares und/oder auf einem von einem Computer lesbaren Träger gespeichertes und/oder von einem Mikroprozessor ausführbares Computerprogramm, **dadurch gekennzeichnet, dass** es Befehle für die Ausführung der Schritte eines Verfahrens zur Auflösung einer Telefonnummer nach einem der Ansprüche 1 bis 6 umfasst, wenn es auf einem Computer ausgeführt wird.

## Claims

1. Method of resolution by an IP domain, termed the origin domain (A), of the public or private telephone number of a customer device, termed the called party, belonging to an IP domain, termed the destination domain (B), **characterized in that** it comprises the following steps:
a) an arbitrary customer device, termed the calling party, belonging to said origin domain (A) places a telephone call to said telephone number,
b) said telephone call is transmitted to said destination domain (B) via a switched telephone network (2) on the basis of said telephone number, and
c) unless advised to the contrary by the destination domain and/or by the called party, the destination domain (B) dispatches to said origin domain (A) a stream of said switched telephone network (2) containing at least one identifier making it possible to reach the destination domain via an IP network (1).

2. Method of resolution of a telephone number according to Claim 1, **characterized in that** said stream is a call response signal, and **in that** said identifier is inserted into a UUI (User to User Information) and/or into the envelope of access information of said call response signal.

3. Method of resolution of a telephone number according to Claim 1, **characterized in that** said identifier is inserted into a PCM (Pulse Code Modulation) modulated stream.

4. Method of resolution of a telephone number according to any one of Claims 1 to 3, **characterized in that** said origin domain (A) dispatches to said destination domain (B), with said transmitted call, a public key or a cryptographic certificate or an identifier of the origin domain (A), or else an identifier of said calling party, or else a secure pointer to a manager of certificates of the origin domain (A).

5. Method of resolution of a telephone number according to any one of Claims 1 to 4, **characterized in that** said identifier of the destination domain (B) is enciphered and/or signed by the destination domain (B).

6. Method of resolution of a telephone number according to any one of Claims 1 to 5, **characterized in that** the destination domain (B) furthermore dispatches to said origin domain (A) a ticket dependent on a secret known solely to the destination domain (B), said ticket containing information allowing the destination domain (B) to validate a possible future signal, or telephone call or message dispatched to the destination domain (B) by the origin domain (A) via said IP network (1).

7. Device for interconnection (100) between an IP domain, termed the origin domain (A), and a fixed or mobile switched telephone network (2), comprising means for receiving a telephone call placed by a first customer device belonging to said origin domain (A) to the public or private telephone number of a second customer device belonging to an IP domain, termed the destination domain (B), and means for transmitting said telephone call to said destination domain (B) via said switched telephone network (2) on the basis of said telephone number, **characterized in that** it furthermore comprises means for receiving on the part of the destination domain (B) a stream of the switched telephone network (2) containing at least one identifier making it possible to reach the destination domain (B) via said IP network (1).

8. Device for interconnection (200) between a fixed or mobile switched telephone network (2) and an IP domain, termed the destination domain (B), comprising means for receiving, via said switched telephone network (2), a telephone call placed by a first customer device belonging to an IP domain, termed the origin domain (A) to the public or private telephone number of a second customer device belonging to said destination domain (B), **characterized in that** it furthermore comprises means for dispatching to said origin domain (A) a stream of the switched telephone network (2) containing at least one identifier making it possible to reach the destination domain (B) via said IP network (1).

9. Device for interconnection according to Claim 7 or Claim 8, **characterized in that** said stream is a call response signal, and **in that** said identifier is inserted into a UUI (User to User Information) and/or into the envelope of access information of said call response signal.

10. Device for interconnection according to Claim 7 or Claim 8, **characterized in that** said identifier is inserted into a PCM (Pulse Code Modulation) modulated stream.

11. Irremovable, or partially or totally removable means for storing data, comprising computer program code instructions for the execution of the steps of a method of resolution of a telephone number according to any one of Claims 1 to 6.

12. Computer program downloadable from a communication network and/or stored on a medium readable by computer and/or executable by a microprocessor, **characterized in that** it comprises instructions for the execution of the steps of a method of resolution of a telephone number according to any one of Claims 1 to 6, when it is executed on a computer.
